# EUROPÄISCHE PATENTSCHRIFT

(11) **EP 3 541 561 B1**
(45) Veröffentlichungstag und Bekanntmachung des Hinweises auf die Patenterteilung: **06.12.2023**
(21) Anmeldenummer: 17791079.1
(22) Anmeldetag: 26.10.2017
(51) Int. Cl.: B23K 20/04, B21B 1/38, B32B 15/01, B23K 101/16, B23K 101/18

(54) **VERFAHREN ZUR HERSTELLUNG EINES VERBUNDWERKSTOFFES DURCH PLATTIEREN, SOWIE VERBUNDWERKSTOFF**
METHOD FOR PRODUCING A COMPOSITE MATERIAL THROUGH PLATING, AND COMPOSITE MATERIAL
PROCÉDÉ DE FABRICATION D'UN MATÉRIAU COMPOSITE AU MOYEN D'UN REVÊTEMENT ET MATÉRIAU COMPOSITE

(30) Priorität: 18.11.2016 DE 102016122198
(43) Veröffentlichungstag der Anmeldung: 25.09.2019
(73) Patentinhaber: Wickeder Westfalenstahl GmbH, 58739 Wickede (Ruhr) (DE)
(72) Erfinder: BALKENHOL, Michael, 59457 Werl (DE); ERLEMEYER, Jens, 58638 Iserlohn (DE)
(74) Vertreter: Schäperklaus, Jochen
(86) Internationale Anmeldenummer: PCT/EP2017/077484
(87) Internationale Veröffentlichungsnummer: WO 2018/091251

(56) Entgegenhaltungen:
- EP-A2- 2 090 395
- DE-A1-102013 219 404
- JP-A- S 617 082

## Beschreibung

Die vorliegende Erfindung betrifft ein Verfahren zur Herstellung eines Verbundwerkstoffs gemäß dem Oberbegriff des Anspruchs 1, sowie einen Verbundwerkstoff gemäß Anspruch 11.

Ein Verfahren zur Herstellung eines Verbundwerkstoffs durch Plattieren ist beispielsweise aus der PCT/US15/41857 bekannt geworden. Hier wird ein Verfahren zur Herstellung eines Verbundwerkstoffs mittels Kaltwalzen beschrieben, bei dem unterschiedliche Metallstreifen nebeneinander gefügt werden. Hierbei werden mehrere Metallstreifen einlaufseitig, sowohl nebeneinander als auch übereinander, so zusammengeführt, dass das dem Walzspalt des Walzgerüstes zugeführte Material einen lückenlosen rechteckigen Querschnitt aufweist. Ferner werden die einlaufseitigen Streifenbreiten so gewählt, dass sich Überlappungen zwischen den übereinander geführten Streifen ergeben (vergleichbar der Verband-Versatzart beim Mauern). Durch den anschließenden Kaltwalzplattierprozess wird Haftung zwischen den überlappenden Materialoberflächen eingestellt und so ein Verbundwerkstoff realisiert, der unterschiedliche Metalle, in Walzrichtung gesehen nebeneinander, kombiniert.

Wegen der Verwendung mehrerer Streifen, die zu einem Verbundwerkstoff verbunden, sprich plattiert werden, wird dieses Verfahren bzw. Plattierdesign auch als Streifenplattierung bezeichnet.

Bei der Streifenplattierung nach dem Stand der Technik sind die Abmessungen der Einzelstreifen, insbesondere hinsichtlich der minimalen Breite, limitiert. Dies gilt im Wesentlichen für alle Prozessschritte, insbesondere auch für das Zuschneiden, das Reinigen und das Aktivieren der Komponenten.

Bei den üblicherweise in Kaltwalz(-plattier)betrieben anzutreffenden Industrieanlagen ist davon auszugehen, dass die Breite der zu verarbeitenden Metallstreifen größer als die Banddicke sein muss (waagerechtes Rechteckprofil). Streifen mit einer Breite unterhalb der Blechdicke (senkrechtes Rechteckprofil) können in der Regel nicht verarbeitet werden.

Ferner ist davon auszugehen, dass der Fertigungsaufwand der Streifenplattierung signifikant mit jedem zusätzlichen Plattierpartner ansteigt. Jeder zugeführte Plattierpartner muss mehrere Prozesschritte bis zur Plattiereignung durchlaufen. Darüber hinaus muss jeder Streifen prozesssicher bis zum Walzspalt zugeführt (Einspannen, Einfädeln) und geführt (Prozessbetrieb) werden. Neben den somit steigenden Prozess- und Nebenzeiten je Streifen steigt auch der Aufwand bezüglich zusätzlich benötigter Abwickelstationen und Führungen.

Auch weist die Streifenplattierung in der Regel eine relativ hohe Anzahl von Grenzschichten auf, welche sich negativ auf die Verbundeigenschaften auswirken können. Grenzschichten erhöhen den elektrischen Widerstand und reduzieren u.U. die mechanische Belastbarkeit und Verformbarkeit des Verbundwerkstoffes. Typische Prozessfehler ("Plattierfehler") gehen üblicherweise von der Grenzschicht aus. Zusätzliche Grenzschichten erhöhen somit auch die Fehlermöglichkeiten bzw. das Fehlerrisiko.

Die DE 10 2013 219 404 A1 offenbart ein Verfahren zur Herstellung eines Bands aus zwei unterschiedlichen Metallen und/oder metallischen Legierungen aus Bändern, bei dem die Metalle und/oder die metallischen Legierungen des Bands durch Walzplattieren fest miteinander verbunden werden, bei dem zwei erste metallische Bänder und ein zweites Band aus einem anderen Metall oder einer anderen metallischen Legierung, an jeweils zwei Anlegekanten ausgehend von jeweils einer Kante in eine der zueinander parallelen Flächen hinein profiliert werden, wobei bei dem Profilieren über die gesamte zu verbindende Länge der ersten Bänder eine Ausnehmung durch Entfernen von Material aus zweien der Bänder entsteht und diese Kante auf der gesamten zu verbindenden Länge entfernt wird.

Die JP S61 7082 A offenbart einen Verbundwerkstoff, bei dem zwei verschiedene Metallstreifen miteinander verbunden werden. Einer der beiden Metallstreifen weist dabei eine Vertiefung auf.

Hier setzt die vorliegende Erfindung an und macht es sich zur Aufgabe ein verbessertes Verfahren zur Herstellung eines Verbundwerkstoffs vorzuschlagen, welches mindestens einen, vorzugsweise alle oben skizzierten Nachteile vermeidet, mindestens aber reduziert. Das erfindungsgemäße Verfahren soll das darstellbare Breitenspektrum erweitern und insbesondere die Herstellung von sehr geringen Bereichsbreiten ermöglichen, welche ansonsten mit gegebenen Industrieanlagen nicht oder nur mit erheblichem Aufwand gefertigt werden könnten.

Ferner soll das erfindungsgemäß vorgeschlagene Verfahren den Fertigungsaufwand reduzieren und somit ressourcenschonender als bekannte Verfahren zur Herstellung ähnlicher Plattierdesigns sein. Auch soll die Anzahl der artgleichen Grenzschichten reduziert und hierdurch verbesserte Verbundeigenschaften erreicht, sowie typische Grenzflächenfehler lokal vermieden werden.

Erfindungsgemäß wird diese Aufgabe durch ein Verfahren zur Herstellung eines Verbundwerkstoffs durch plattieren einer Bandanordnung gelöst, wobei die Bandanordnung mindestens einen ersten Streifen und einen zweiten Streifen umfasst, die einen Füllkanal zwischen sich ausbilden, wobei die Bandanordnung mindestens einen Füllstreifen umfasst, wobei die vorgenannte Bandanordnung plattiert wird, wobei ein Teil des Füllstreifens während des Plattierens in den Füllkanal extrudiert. Mit anderen Worten, werden die schmalen Bereiche im herzustellenden Verbundwerkstoff nicht mehr als separater Streifen zugeführt. Vielmehr wird der sich ergebende schmale Bereich bzw. werden die sich ergebenden schmalen Bereiche während des Plattierens durch Extrusion in den Füllkanal aus dem Füllstreifen miterzeugt. Der in den Füllkanal extrudierte Teil des Füllstreifens bildet demnach gewissermaßen einen schmalen Bereich, der jedoch nach herkömmlichen Methoden nicht oder nur mit immensem Aufwand hergestellt werden könnte. Die Breite des entstehenden Bereichs in dem Füllkanal ist somit nicht mehr an die Breitenanforderungen der Voraggregate des Plattierprozesses gebunden. In Folge der geringeren Anzahl einlaufender Streifen werden sowohl der Fertigungsaufwand als auch die Anzahl der artgleichen Grenzflächen im Verbund reduziert. Die Anzahl der artgleichen Grenzflächen wird insbesondere dadurch reduziert, als dass sich zwischen dem ursprünglichen Füllstreifen und dem in den Füllkanal extrudierten Teil des Füllstreifens keine Grenzfläche ausbildet, die zumindest theoretisch bei der Verwendung zweier separater Streifen für diesen Bereich vorhanden wäre.

Zur Unterscheidung zwischen den zugeführten Komponenten für den Plattierprozess und dem plattierten Verbundwerkstoff, soll von dem Plattierprozess zugeführten Streifen und beim Verbundwerkstoff von Bereichen gesprochen werden. Die Bereiche sind sozusagen die plattierten Streifen.

Mindestens der erste oder der zweite Streifen wird aus zwei oder mehr Einzelstreifen gebildet. Eine kostengünstige Möglichkeit zur Ausgestaltung der Aussparung bzw. des Füllkanals, stellt die Verbindung, beispielsweise durch Plattieren, zweier Streifen unterschiedlicher Breite dar. Die Aussparung in Längsrichtung des entstehenden Streifens ergibt sich dann gewissermaßen automatisch.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass der Füllstreifen oberhalb des Füllkanals angeordnet ist und der Füllstreifen eine größere Breite als der Füllkanal aufweist. Hierdurch kann sichergestellt werden, dass der Füllstreifen genug Material oberhalb des Füllkanals bereitstellt und die Streifen bzw. die zwischen den Streifen angeordneten Füllkanäle als Matrizen für den Extrusionsprozess dienen können.

In einer weiteren vorteilhaften Ausgestaltung der Erfindung kann vorgesehen sein, dass die Bandanordnung mehr als zwei Streifen und/oder mehr als einen Füllstreifen umfasst, wobei die Streifen Füllkanäle zwischen sich ausbilden. Das Prinzip des in den Füllkanal extrudierbaren bzw. extrudierten Teils eines Füllstreifens lässt sich selbstverständlich auch auf mehrere nebeneinander angeordnete Füllkanäle, die entsprechend von Streifen zwischen sich ausgebildet werden, übertragen. Die nächste "Ausbaustufe" wären beispielsweise drei Streifen, die entsprechend zwei Füllkanäle zwischen sich ausbilden. Auch ist natürlich denkbar, dass die Bandanordnung mehr als zwei Füllstreifen umfasst. Es sind gleiche oder unterschiedliche Materialien für Streifen bzw. Füllstreifen denkbar.

In einer weiteren vorteilhaften Ausgestaltung der Erfindung kann vorgesehen sein, dass der oder die Füllstreifen eine geringere Festigkeit, insbesondere Zugfestigkeit (Rm), als die Streifen, vorzugsweise eine Festigkeitsdifferenz von mindestens 50N/mm², vor dem Plattieren aufweisen. Die Streifen wirken wie eine Matrize für den Füllstreifen. Um sicherzustellen, dass der Füllstreifen in den Füllkanal extrudiert und nicht die Streifen, bietet es sich an, die oben skizzierte Differenz bei den Zugfestigkeiten einzuhalten, wobei sich eine Differenz von mindestens 50N/mm² in Versuchen bewährt hat.

In einer weiteren vorteilhaften Ausgestaltung der Erfindung kann vorgesehen sein, dass der oder die Füllstreifen der Bandanordnung eine Zugfestigkeit (Rm) vor dem Plattieren von weniger als 300N/mm² aufweisen und/oder dass die Streifen eine Zugfestigkeit (Rm) von mindestens 200N/mm² vor dem Plattieren aufweisen. Auch diese Werte haben sich in Versuchsreihen bewährt und führen in der Regel zu einem zufriedenstellenden Verbundwerkstoff, welcher die oben skizzierten Vorteile bzw. Eigenschaften aufweist.

In einer weiteren vorteilhaften Ausgestaltung der Erfindung kann vorgesehen sein, dass als Material für den oder die Streifen Eisen und Nichteisenmetalle sowie deren Legierungen, insbesondere Stahl, Edelstahl und Buntmetalle, in Frage kommen und/oder für den oder die Füllstreifen Eisen und Nichteisenmetalle, insbesondere Stahl, Edelstahl, Buntmetalle, Edelmetalle, Aluminium und deren Legierungen in Frage kommen.

In einer weiteren vorteilhaften Ausgestaltung der Erfindung kann vorgesehen sein, dass eine Seite der Bandanordnung, vorzugsweise die Unterseite der Bandanordnung, durch die Streifen und den oder die Füllkanäle gebildet wird. Vor dem Plattieren bildet die Bandanordnung demnach durch die Unterbrechungen der Füllkanäle keinen lückenlos rechteckigen Querschnitt auf.

In einer weiteren vorteilhaften Ausgestaltung der Erfindung kann vorgesehen sein, dass eine Seite der Bandanordnung, vorzugsweise die Oberseite der Bandanordnung, vollständig durch den oder die Füllstreifen gebildet wird. Diese Ausgestaltung bietet sich aus produktionstechnischen Vorteilen an, da ein derartiger Füllstreifen bzw. eine sich hieraus ergebende Bandanordnung effektiv durch entsprechende Führungen in den Walzspalt geführt werden kann.

Alternativ kann auch vorgesehen sein, dass eine Seite der Bandanordnung, vorzugsweise die Oberseite der Bandanordnung, nur abschnittsweise durch den oder die Füllstreifen gebildet wird, insbesondere, dass die Oberseite durch die Streifen und den oder die Füllstreifen gebildet wird. Hierdurch kann materialsparend nur abschnittsweise ein entsprechendes Füllmaterial für die Extrusion vorgehalten werden.

In diesem Zusammenhang kann vorzugsweise vorgesehen sein, dass die Streifen Aussparungen im Bereich mindestens eines Füllkanals zur Aufnahme eines Teils des Füllstreifens aufweisen, wobei insbesondere vorgesehen ist, dass der Füllstreifen aus der durch die Streifen auf der Oberseite gebildeten Ebene heraussteht. Durch die Aussparungen, die vorzugsweise in Längsrichtung der Bandanordnung verlaufen, können zwei positive Effekte erreicht werden. Zum einen wird eine gewisse Querstabilität bzw. Führung der Füllstreifen beim Einlauf in den Walzspalt erreicht. Zum anderen kann hier etwas mehr Material für den Extrusionsvorgang bereitgestellt werden. Es kann noch mehr Material für den Extrusionsprozess bereitgestellt werden, wenn der Füllstreifen aus der durch die Streifen auf der Oberseite gebildeten Ebene heraussteht.

In einer weiteren vorteilhaften Ausgestaltung der Erfindung kann vorgesehen sein, dass die Streifen Aussparungen im Bereich mindestens eines Füllkanals zur Aufnahme eines Teils des Füllstreifens aufweisen, wobei insbesondere vorgesehen ist, dass der Füllstreifen nicht aus der durch die Streifen auf der Oberseite gebildeten Ebene heraussteht. Der Vorteil liegt in der Materialersparnis. Ferner ist eine leichtere Führung der einlaufenden Streifen in die Walzplattiereinrichtung möglich.

Eine weitere Aufgabe der vorliegenden Erfindung besteht darin, einen verbesserten Verbundwerkstoff vorzuschlagen, insbesondere einen Verbundwerkstoff vorzuschlagen, der sehr geringe Bereichsbreiten aufweist und/oder eine geringe Anzahl an artgleichen Grenzschichten aufweist.

Erfindungsgemäß wird diese Aufgabe durch einen Verbundwerkstoff gemäß Anspruch 11 gelöst, der sich dadurch auszeichnet, dass er gemäß dem Verfahren nach einem der Ansprüche 1 bis 10 hergestellt worden ist. Ein derart hergestellter Verbundwerkstoff kann sehr geringe Bereichsbreiten aufweisen. Eine geringe Anzahl an artgleichen Grenzschichten ergibt sich im Wesentlichen daraus, dass beispielsweise keine Grenzschicht zwischen dem ursprünglichen Füllstreifen und dem in den Füllkanal extrudierten Teil des Füllstreifens existiert.

Weitere vorteilhafte Ausgestaltungen der vorgeschlagenen Erfindung ergeben sich insbesondere aus den Merkmalen der Unteransprüche. Die Gegenstände bzw. Merkmale der verschiedenen Ansprüche können grundsätzlich beliebig miteinander kombiniert werden.

In einer vorteilhaften Ausgestaltung der Erfindung kann vorgesehen sein, dass der Verbundwerkstoff einen rechteckförmigen oder annähernd rechteckförmigen Querschnitt aufweist. Eine derartige Form eignet sich vorteilhaft für die Weiterverarbeitung, beispielsweise als Halbzeug oder auch als Fertigprodukt.

In einer weiteren vorteilhaften Ausgestaltung der Erfindung kann vorgesehen sein, dass der Füllkanal bzw. die Füllkanäle vollständig mit einem extrudierten Teil des bzw. der Füllstreifen gefüllt sind. Hierdurch ergibt sich eine im Wesentlichen plane Oberfläche statt des ursprünglichen Füllkanals.

In einer weiteren vorteilhaften Ausgestaltung der Erfindung kann vorgesehen sein, dass der Füllkanal bzw. die Füllkanäle nur teilweise mit einem extrudierten Teil des bzw. der Füllstreifen gefüllt sind. Der Vorteil liegt in der Materialersparnis.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Querschnittdarstellung einer Bandanordnung;
- Fig. 2: eine Querschnittdarstellung eines aus der Bandanordnung gemäß Fig. 1 hergestellten Verbundprofils;
- Fig. 3: eine Querschnittdarstellung einer Bandanordnung;
- Fig. 4: eine Querschnittdarstellung eines aus der Bandanordnung gemäß Fig. 3 hergestellten Verbundprofils;
- Fig. 5: eine Querschnittdarstellung einer Bandanordnung;
- Fig. 6: eine Querschnittdarstellung eines aus der Bandanordnung gemäß Fig. 5 hergestellten Verbundprofils;
- Fig. 7: eine Querschnittdarstellung einer Bandanordnung;
- Fig. 8: eine Querschnittdarstellung eines aus der Bandanordnung gemäß Fig. 7 hergestellten Verbundprofils;
- Fig. 9: eine Querschnittdarstellung einer Bandanordnung;
- Fig. 10: eine Querschnittdarstellung eines aus der Bandanordnung gemäß Fig. 9 hergestellten Verbundprofils;
- Fig. 11: eine Bandanordnung gemäß Fig. 1 in einer perspektivischen Ansicht auf die Oberseite;

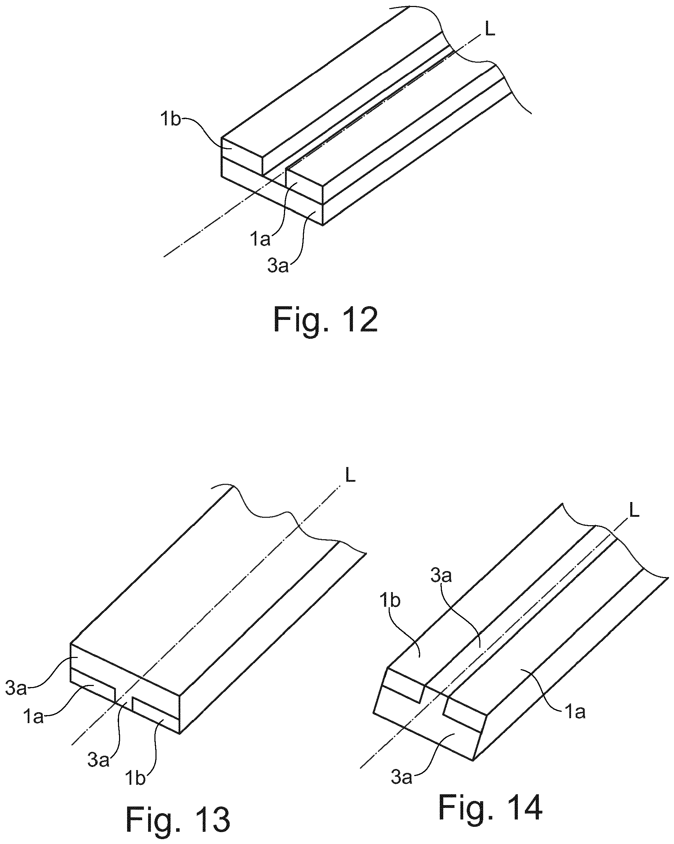

- Fig. 12: eine Bandanordnung gemäß Fig. 1 in einer perspektivischen Ansicht auf die Unterseite;
- Fig. 13: ein aus der Bandanordnung gemäß Fig. 1 bzw. Fig. 11 und 12 hergestellter Verbundwerkstoff in einer perspektivischen Ansicht auf die Oberseite;
- Fig. 14: ein aus der Bandanordnung gemäß Fig. 1 bzw. Fig. 11 und 12 hergestellter Verbundwerkstoff in einer perspektivischen Ansicht auf die Unterseite.

Die Proportionen in den Abbildungen entsprechen nicht zwangsläufig den realen Proportionen sondern dienen im Wesentlichen illustrativen Zwecken.

Folgende Bezugszeichen werden in den Abbildungen verwendet:
- L: Längsachse
- B_{G}: Gesamtbreite
- B_{F}: Breite des Füllkanals
- H_{F}: Höhe des Füllkanals
- Bs: Breite des Füllstreifens
- A: Aussparung
- O: Oberseite
- U: Unterseite

- 1a: (erster) Streifen
- 1b: (zweiter) Streifen
- 1c: (dritter) Streifen
- 1d: (vierter) Streifen
- 2a: Füllkanal
- 2b: (zweiter) Füllkanal
- 2c: (dritter) Füllkanal

- 3a: Füllstreifen
- 3b: (zweiter) Füllstreifen

Bei dem erfindungsgemäß vorgeschlagenen Verfahren wird eine Bandanordnung einer Walzplattiereinrichtung (nicht dargestellt) bzw. dem Einlauf einer Walzplattiereinrichtung zugeführt und verlässt die Walzplattiereinrichtung bzw. den Auslauf als plattierter Verbundwerkstoff. Ein bevorzugtes Plattierverfahren für die vorliegende Erfindung stellt das Walzplattieren dar. Grundsätzlich sind aber auch andere Plattierverfahren denkbar.

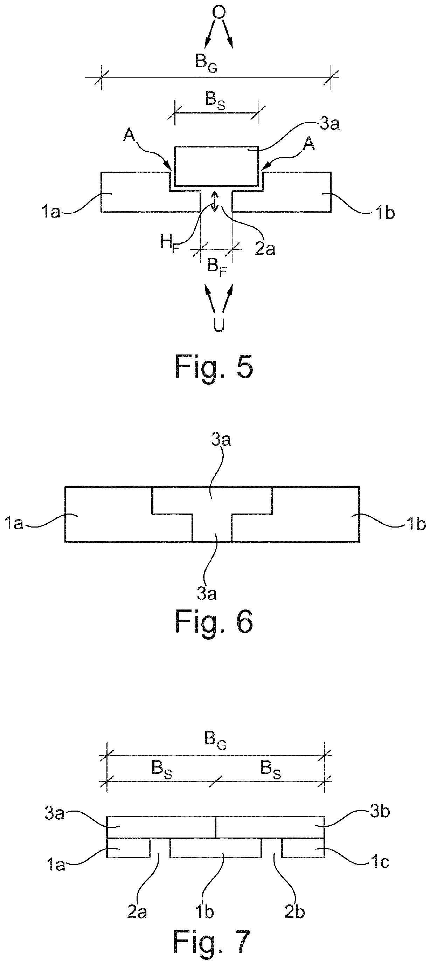

Die Bandanordnung umfasst mindestens einen ersten Streifen 1a und einen zweiten Streifen 1b, wobei der erste Streifen und der zweite Streifen einen Füllkanal 2a zwischen sich ausbilden. Der Füllkanal 2a kann beispielsweise durch eine entsprechende Beabstandung der Streifen ausgebildet sein. Der Füllkanal kann aber auch durch Beabstandung der Streifen und/oder eine entsprechende Aussparung, vorzugsweise eine Aussparung mit einem rechteckförmigen Querschnitt, in den Streifen ausgebildet sein, wie beispielsweise in Fig. 5 dargestellt.

Die Streifen als solches können auch vorzugsweise aus Einzelstreifen unterschiedlicher Breite zusammengesetzt sein, so dass sich der jeweilige Teil des Füllkanals aus der Breitendifferenz der Füllstreifen ergibt. Die Einzelstreifen können bereits vorab zu einem Streifen verbunden, insbesondere plattiert worden sein, aber auch während des nachfolgend beschriebenen Plattiervorgangs unter Extrusion des bzw. der Füllstreifen miteinander verbunden werden. Diese Maßnahme kommt vorzugsweise statt der Einbringung einer Aussparung in einen monolithischen Streifen in Frage.

Der Füllkanal kann auch als Nut angesprochen werden. Der Füllkanal verläuft in Längsrichtung L der Bandanordnung. Die Streifen bilden dabei vorzugsweise jeweils einen Teil des Füllkanals aus.

Ferner umfasst die Bandanordnung mindestens einen Füllstreifen 3a. Der Füllstreifen 3a ist oberhalb des Füllkanals 2a angeordnet und weist eine größere Breite Bs als der Füllkanal 2a auf. Der Füllstreifen 3a ist insbesondere so ausgelegt, dass er im Stadium der Bandanordnung nicht in den Füllkanal 2a hineinpassen würde. Die in den Walzspalt einlaufende Bandanordnung weist somit keinen lückenlos rechteckigen Querschnitt auf.

Als bevorzugte Breite B_{F} des Füllkanals kann eine Größenordnung von 0,5mm bis 10mm angegeben werden.

Als bevorzugte Höhe H_{F} des Füllkanals kann eine Größenordnung von 0,5mm bis 4,5mm angegeben werden
Der Füllstreifen 3a weist vorzugsweise eine geringere Festigkeit, insbesondere Zugfestigkeit (Rm), als der erste Streifen 1a und der zweite Streifen 1b auf. Der Füllstreifen 3a sollte hierbei einlaufseitig eine Zugfestigkeit (Rm) von 300N/mm² nicht überschreiten. Der erste Streifen 1a und der zweite Streifen 1b, die letztendlich wie eine Matrize für den Füllstreifen 3a wirken, sollte zudem eine Zugfestigkeit (Rm) von mindestens 200N/mm² vor dem Plattieren aufweisen. Bei der Auslegung der Bandanordnung ist vorzugsweise eine Festigkeitsdifferenz von min. 50N/mm² zwischen den Streifen und dem bzw. den Füllstreifen anzustreben. Die angegebenen Werte beziehen sich auf Werte vor dem Plattieren.

Als Material für die Streifen kommen Eisen und Nichteisenmetalle sowie deren Legierungen, insbesondere Stahl, Edelstahl und Buntmetalle, in Frage.

Als Material für den oder die Füllstreifen kommen Eisen und Nichteisenmetalle, insbesondere Stahl, Edelstahl, Buntmetalle, Edelmetalle, Aluminium und deren Legierungen, in Frage.

Die Umformung der Bandanordnung in den Verbundwerkstoff soll nachfolgend näher beschrieben werden.

Die Bandanordnung bzw. die einzelnen Streifen bzw. Einzelstreifen der Bandanordnung können beispielsweise von Rollen abgewickelt und über geeignete Führungen zu dem angedachten Querschnitt der Bandanordnung zusammengeführt werden. Hier kann beispielsweise eine Führung mit einer Öffnung zum Einsatz kommen, welche weitestgehend dem Querschnitt der Bandanordnung entspricht. Es kann beispielsweise ein Dorn vorgesehen sein, der in dem Füllkanal verläuft und die Streifen entsprechend auf Abstand bzw. in Position hält. Die Führung kann maßgeblich dazu beitragen, dass der Füllkanal 2a zwischen den Streifen ausgebildet wird.

Der weichere Plattierpartner, sprich der Füllstreifen, wird dem Walzspalt vorzugsweise nur monolithisch zugeführt.

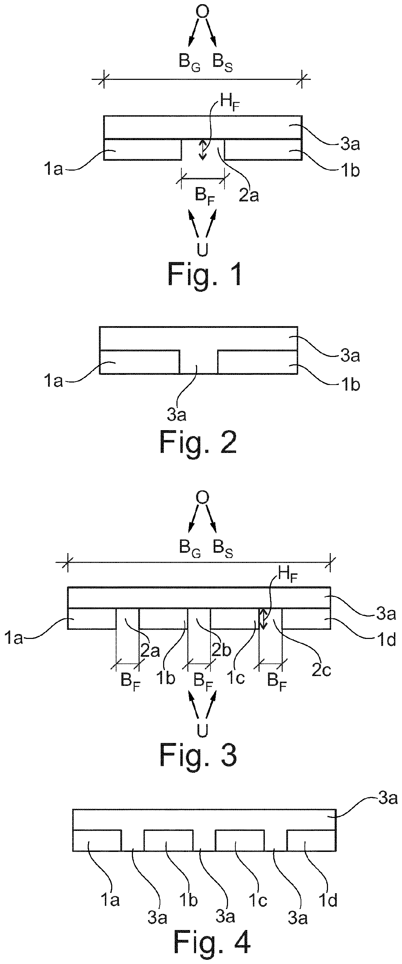

In einer einfachen Ausführungsform der Bandanordnung, wie beispielsweise in der Fig. 1 dargestellt, überdeckt der Füllstreifen die Bandanordnung auf der gesamten Breite B_{G}, insbesondere aber überdeckt der Füllstreifen 3a den Füllkanal 2a. Insofern wird die Oberseite der Bandanordnung vollständig von dem Füllstreifen 3a gebildet, während die Unterseite von dem ersten Streifen 1a und dem zweiten Streifen 1b gebildet werden, unterbrochen durch den Füllkanal 2a. Im Ergebnis ergibt sich eine Bandanordnung, wobei der Füllkanal 2a zunächst noch ausgespart ist.

Während des Plattierens werden - wie in einem üblichen Plattierprozess - die Plattierpartner, insbesondere der Füllstreifen 3a mit dem ersten Streifen 1a und dem zweiten Streifen 1b, verbunden. Es entsteht, wie beim Plattieren üblich, eine grundsätzlich unlösbare Verbindung zwischen den Plattierpartnern.

Während des Plattierens erfolgt jedoch ebenfalls eine Extrusion eines Teils des Füllstreifens 3a in den Füllkanal 2a. Der festere Plattierpartner, sprich die Streifen 1, fungiert hierbei als Matrize für den grundsätzlich weicheren Plattierpartner, sprich den bzw. die Füllstreifen. Auf Grund der Funktion der Streifen können die Streifen 1 auch als Matritzenstreifen angesprochen werden.

Auslaufseitig entsteht ein Verbundwerkstoff, der unterschiedliche Metalle, in Walzrichtung gesehen nebeneinander, kombiniert und dessen Querprofil näherungsweise rechteckig, vorzugsweise rechteckig, ist. Vorzugsweise füllt der in den Füllkanal 2a extrudierte Teil des Füllstreifens 3a, den Füllkanal 2a vollständig aus. Die Unterseite des Verbundwerkstoffs wird entsprechend von dem ersten Streifen 1a, dem zweiten Streifen 1b und dem in den Füllkanal 2a extrudierten Füllstreifen 3a gebildet. Die Oberseite des Verbundwerkstoffs wird bei dieser Ausführungsform vorzugsweise weiterhin vollständig von dem Füllstreifen 3a gebildet.

Im Querschnitt sind die sich aus den Streifen und dem bzw. den Füllstreifen ergebenden Bereiche im entstandenen Verbundwerkstoff gut erkennbar.

Grundsätzlich kann die Bandanordnung auch mehr als zwei Streifen enthalten. In Fig. 3 ist beispielsweise eine Bandanordnung dargestellt, die aus vier Streifen und einem Füllstreifen gebildet wird, insbesondere einem ersten Streifen 1a, einem zweiten Streifen 1b, einem dritten Streifen 1c, einem vierten Streifen 1d und einem Füllstreifen 3a. Insofern bilden der erste Streifen 1a und der zweite Streifen 1b einem ersten Füllkanal 2a zwischen sich, der zweite Streifen 1b und der dritte Streifen 1c einen zweiten Füllkanal 2b usw. zwischen sich aus. Auch im vorliegenden Fall überdeckt der Füllstreifen 3a die Streifen 1a bis 1d über ihre gesamte Breite B_{G}. Die Füllkanäle 2a, 2b, 2c können, aber müssen nicht alle die gleiche Breite B_{F} aufweisen.

Auch eine derartige Bandanordnung kann in einer Plattiereinrichtung, vorzugsweise einer Bandplattiereinrichtung plattiert werden. Die Streifen 1a bis 1d werden mit dem Füllstreifen 3a verbunden, der Füllstreifen 3a extrudiert teilweise in die Füllkanäle 2a bis 2c. Im Ergebnis ergibt sich ein Verbundwerkstoff wie in Fig. 4 dargestellt. Die Oberseite wird vollständig von dem Füllstreifen 3a, die Unterseite abwechselnd von den Streifen und dem in die Füllkanäle extrudierten Füllstreifen gebildet.

In einer weiteren Variante des erfindungsgemäßen Herstellungsverfahrens kann ein Teil des Füllstreifens 3a auch in Aussparungen A der Streifen 1a, 1b aufgenommen sein, die in den nebeneinander angeordneten Streifen angeordnet sind. Es kann ferner vorgesehen sein, dass der Füllstreifen 3a über die aus den Streifen gebildete Ebene hervorsteht. Eine derartige Bandanordnung ist im Querschnitt in der Fig. 5 dargestellt. Es ist ersichtlich, dass der sich ergebende Querschnitt der Bandanordnung nicht rechteckförmig ist. Die Oberseite der Bandanordnung ist vielmehr treppenförmig ausgestaltet. Gleichwohl ist der Füllkanal 2a zwischen den Streifen 1a, 1b angeordnet und wird von dem Füllstreifen 3a überdeckt. Es wird jedoch - im Gegensatz zu den zuvor beschriebenen Varianten - nicht die gesamte Oberseite der Bandanordnung durch den Füllstreifen 3a gebildet. Vielmehr wird die Oberseite entsprechend durch die Streifen 1a, 1b und den Füllstreifen 3a gebildet. Die Unterseite wird auch hier durch die Streifen 1a, 1b gebildet, die entsprechend einen Füllkanal 2a zwischen sich ausbilden.

Wie bereits oben skizziert wird die Bandanordnung einer Plattiereinrichtung zugeführt und entsprechend plattiert. Der Füllstreifen 3a wird teilweise in den Füllkanal 2a extrudiert. Dabei kann der Füllstreifen voluminöser ausgestaltet sein und entsprechend mehr Material für den Extrusionsprozess bereitstellen, insbesondere da er über die Aussparungen ein wenig versenkt werden kann. Gleichermaßen bilden die Aussparungen eine zusätzliche Führung für den Einlauf der Bandanordnung in die Walzplattiereinrichtung. Sofern der Füllstreifen sozusagen über die Ebene der Streifen erhöht ist, kann hier noch mehr Material für den Extrusionsprozess bereitgestellt werden. Es sollten jedoch vorzugsweise Füllstreifen verwendet bzw. derart ausgerichtet werden, dass sie eine größere Breite als Höhe aufweisen, wenn sie in dem Füllkanal bzw. den Füllkanälen eingelegt sind.

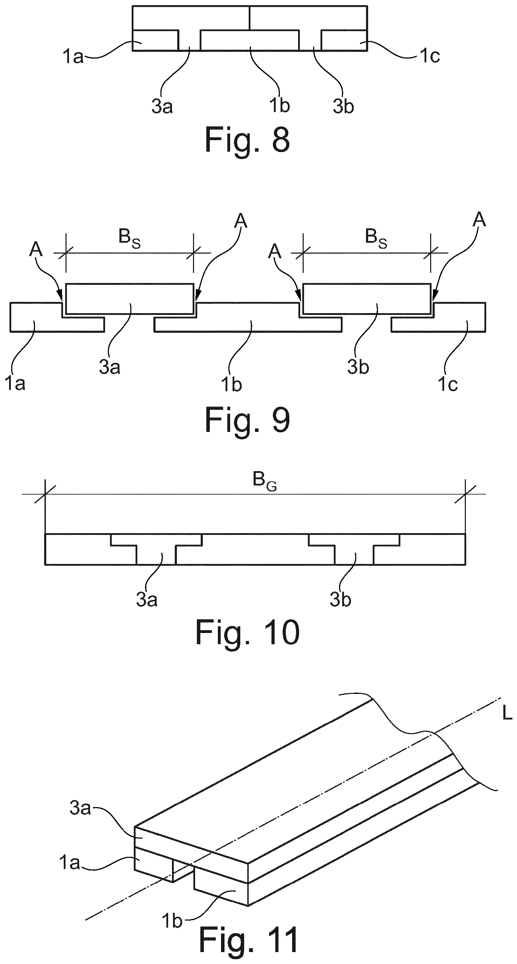

Es können auch mehr als ein Füllstreifen vorgesehen sein, beispielsweise ein erster Füllstreifen 3a und ein zweiter Füllstreifen 3b. Eine derartige Variante ist in Fig. 7 (Bandanordnung) und Fig. 8 (Verbundmaterial) dargestellt. Die Füllstreifen bilden hier die gesamte Oberseite der Bandanordnung aus.

Auch ist eine Variante gemäß Fig. 9 und Fig. 10 denkbar. Hier ist beispielsweise für die Bandanordnung vorgesehen, dass die Oberseite O der Bandanordnung nur abschnittsweise durch die Füllstreifen 3a, 3b gebildet wird. Auch ist vorgesehen, dass die Streifen 1a, 1b, 1c Aussparungen A im Bereich des jeweiligen Füllkanals 2a, 2b zur Aufnahme der jeweiligen Füllstreifens 3a, 3b aufweisen. Auch sind die Füllstreifen 3a, 3b hier erhöht ausgebildet.

Die vorgenannten Varianten sind nicht abschließend. Es ist insbesondere denkbar, dass die Bandanordnung aus mehr als zwei Streifen und/oder mehr als einem Füllstreifen gebildet wird, entsprechend ein oder mehrere Füllkanäle aufweist. Die Oberfläche der Bandanordnung kann ganz oder teilweise durch den oder die Füllstreifen ausbildet sein. Sofern die Oberfläche der Bandanordnung teilweise durch den oder die Füllstreifen ausbildet ist, kommen vorzugsweise Aussparungen im Bereich der Füllkanäle in Frage, wobei insbesondere der Füllstreifen aus der durch die Streifen auf der Oberseite gebildeten Ebene heraussteht.

Im Ergebnis ergibt sich in allen Fällen ein Verbundwerkstoff in Form einer Streifenplattierung, die äußerst rationell hergestellt werden kann, insbesondere können vergleichsweise schmale Abschnitte, in Form der in die Füllkanäle extrudierten Füllstreifen erzeugt werden, die beispielsweise auf der Unterseite des Verbundwerkstoffs als sehr schmale Abschnitte zum Vorschein kommen.

## Patentansprüche

1. Verfahren zur Herstellung eines Verbundwerkstoffs durch plattieren einer Bandanordnung mit einer Oberseite (O) und einer Unterseite (U), wobei
- die Bandanordnung mindestens einen ersten Streifen (1a) und einen zweiten Streifen (1b) umfasst, die einen Füllkanal (3a) zwischen sich ausbilden, wobei
- die Bandanordnung mindestens einen Füllstreifen (3a) umfasst, wobei
- die vorgenannte Bandanordnung plattiert wird, wobei
- ein Teil des Füllstreifens (3a) während des Plattierens in den Füllkanal (2a) extrudiert
- **dadurch gekennzeichnet, dass** mindestens der erste oder der zweite Streifen aus zwei oder mehr Einzelstreifen gebildet wird.

2. Verfahren nach Anspruch 1, **dadurch gekennzeichnet, dass** der Füllstreifen (3a) oberhalb des Füllkanals (2a) angeordnet ist.

3. Verfahren nach mindestens einem der vorhergehenden Ansprüche, **dadurch gekennzeichnet, dass** der Füllstreifen eine größere Breite (Bs) als der Füllkanal (B_{F}) aufweist.

4. Verfahren nach mindestens einem der vorhergehenden Ansprüche, **dadurch gekennzeichnet, dass** die Bandanordnung mehr als zwei Streifen (1a bis 1d) und/oder mehr als einen Füllstreifen (3a, 3b) umfasst, wobei die Streifen Füllkanäle (2a bis 2c) zwischen sich ausbilden.

5. Verfahren nach mindestens einem der vorhergehenden Ansprüche, **dadurch gekennzeichnet**, das als Material für den oder die Streifen Eisen und Nichteisenmetalle sowie deren Legierungen, insbesondere Stahl, Edelstahl und Buntmetalle, in Frage kommen und/oder für den oder die Füllstreifen Eisen und Nichteisenmetalle, insbesondere Stahl, Edelstahl, Buntmetalle, Edelmetalle, Aluminium und deren Legierungen in Frage kommen.

6. Verfahren nach mindestens einem der vorhergehenden Ansprüche, **dadurch gekennzeichnet, dass** eine Seite der Bandanordnung, vorzugsweise die Unterseite (U) der Bandanordnung, durch die Streifen (1a, 1b) und den oder die Füllkanäle (3a) gebildet wird.

7. Verfahren nach mindestens einem der vorhergehenden Ansprüche, **dadurch gekennzeichnet, dass** eine Seite der Bandanordnung, vorzugsweise die Oberseite (O) der Bandanordnung, vollständig durch den oder die Füllstreifen (3a) gebildet wird.

8. Verfahren nach mindestens einem der Ansprüche 1 bis 6, **dadurch gekennzeichnet, dass** eine Seite der Bandanordnung, vorzugsweise die Oberseite (O) der Bandanordnung, nur abschnittsweise durch den oder die Füllstreifen (3a, 3b) gebildet wird.

9. Verfahren nach mindestens einem der vorhergehenden Ansprüche, **dadurch gekennzeichnet, dass** die Streifen (1a, 1b, 1c) Aussparungen (A) im Bereich mindestens eines Füllkanals (2a, 2b) zur Aufnahme eines Teils des Füllstreifens (3a bzw. 3b) aufweisen, wobei insbesondere vorgesehen ist, dass der Füllstreifen (3a bzw. 3b) aus der durch die Streifen auf der Oberseite gebildeten Ebene heraussteht.

10. Verfahren nach mindestens einem der vorhergehenden Ansprüche, **dadurch gekennzeichnet, dass** die Streifen (1a, 1b, 1c) Aussparungen (A) im Bereich mindestens eines Füllkanals (2a, 2b) zur Aufnahme eines Teils des Füllstreifens (3a bzw. 3b) aufweisen, wobei insbesondere vorgesehen ist, dass der Füllstreifen (3a bzw. 3b) nicht aus der durch die Streifen auf der Oberseite gebildeten Ebene heraussteht.

11. Verbundwerkstoff, **dadurch gekennzeichnet, dass** er gemäß dem Verfahren nach einem der Ansprüche 1 bis 10 hergestellt worden ist.

12. Verbundwerkstoff nach Anspruch 11, **dadurch gekennzeichnet, dass** der Verbundwerkstoff einen rechteckförmigen oder annähernd rechteckförmigen Querschnitt aufweist.

13. Verbundwerkstoff nach mindestens einem der vorhergehenden Ansprüche, **dadurch gekennzeichnet, dass** der Füllkanal bzw. die Füllkanäle (2a bis 2c) vollständig mit einem extrudierten Teil des bzw. der Füllstreifen (3a, 3b) gefüllt sind.

14. Verbundwerkstoff nach mindestens einem der vorhergehenden Ansprüche, **dadurch gekennzeichnet, dass** der Füllkanal bzw. die Füllkanäle (2a bis 2c) nur teilweise mit einem extrudierten Teil des bzw. der Füllstreifen (3a, 3b) gefüllt sind.

## Claims

1. Method for producing a composite material by plating a strap assembly having an upper side (O) and a lower side (U), wherein
- the strap assembly comprises at least one first strip (1a) and one second strip (1b) which form between them a filling channel (3a), wherein
- the strap assembly comprises at least one filling strip (3a), wherein
- the aforementioned strap assembly is plated, wherein
- a part of the filling strip (3a) is extruded into the filling channel (2a) during the plating
- **characterised in that** at least the first or the second strip is formed of two or more individual strips.

2. Method according to claim 1, **characterised in that** the filling strip (3a) is arranged above the filling channel (2a)

3. Method according to at least one of the preceding claims, **characterised in that** the filling strip has a greater width (B_{S}) than the filling channel (B_{F}).

4. Method according to at least one of the preceding claims, **characterised in that** the strap assembly comprises more than two strips (1a to 1d) and/or more than one filling strip (3a, 3b), wherein the strips form filling channels (2a to 2c) between them.

5. Method according to at least one of the preceding claims, **characterised in that** as a material for the strip or strips iron and non-ferric metals and their alloys, in particular steel, stainless steel and non-ferrous metals, come into consideration and/or for the filling strips iron and non-ferrous metals, in particular steel, stainless steel, non-ferrous metals, precious metals, aluminium and their alloys come into consideration.

6. Method according to at least one of the preceding claims, **characterised in that** one side of the strap assembly, preferably the lower side (U) of the strap assembly, is formed by the strips (1a, 1b) and the filling channel or channels (3a).

7. Method according to at least one of the preceding claims, **characterised in that** one side of the strap assembly, preferably the upper side (O) of the strap assembly, is formed completely by the filling strip or strips (3a).

8. Method according to at least one of claims 1 to 6, **characterised in that** one side of the strap assembly, preferably the upper side (O) of the strap assembly, is formed only in some sections by the filling strip or strips (3a, 3b).

9. Method according to at least one of the preceding claims, **characterised in that** the strips (1a, 1b, 1c) have cutouts (A) in the region of at least one filling channel (2a, 2b) for receiving a part of the filling strip (3a or 3b), wherein in particular it is provided that the filling strip (3a or 3b) protrudes beyond the plane formed on the upper side by the strips.

10. Method according to at least one of the preceding claims, **characterised in that** the strips (1a, 1b, 1c) have cutouts (A) in the region of at least one filling channel (2a, 2b) for receiving a part of the filling strip (3a or 3b), wherein in particular it is provided that the filling strip (3a or 3b) does not protrude beyond the plane formed on the upper side by the strips.

11. Composite material **characterised in that** it has been produced according to the method according to any of claims 1 to 10.

12. Composite material according to claim 11, **characterised in that** the composite material has a rectangular or approximately rectangular cross-section.

13. Composite material according to at least one of the preceding claims, **characterised in that** the filling channel or channels (2a to 2c) are completely filled with an extruded part of the filling strip or strips (3a, 3b).

14. Composite material according to at least one of the preceding claims, **characterised in that** the filling channel or channels (2a to 2c) are filled only partially with an extruded part of the filling strip or strips (3a, 3b).

## Revendications

1. Procédé de fabrication d'un matériau composite par placage d'un ensemble de bande pourvu d'une face supérieure (O) et d'une face inférieure (U), dans lequel
- l'ensemble de bande comporte au moins un premier ruban (1a) et un second ruban (1b), qui forment un canal de remplissage (3a) entre eux, dans lequel
- l'ensemble de bande comporte au moins un ruban de remplissage (3a), dans lequel
- l'ensemble de bande précédemment cité est plaqué, dans lequel
- une partie du ruban de remplissage (3a) est extrudée dans le canal de remplissage (2a) pendant le placage
- **caractérisé en ce qu'**au moins le premier ou le second ruban est formé de deux ou plusieurs rubans individuels.

2. Procédé selon la revendication 1, **caractérisé en ce que** le ruban de remplissage (3a) est disposé au-dessus du canal de remplissage (2a).

3. Procédé selon au moins l'une quelconque des revendications précédents, **caractérisé en ce que** le ruban de remplissage présente une largeur plus importante (Bs) que celle du canal de remplissage (B_{F}).

4. Procédé selon au moins l'une quelconque des revendications précédentes, **caractérisé en ce que** l'ensemble de bande comporte plus de deux rubans (1a à 1d) et/ou plus d'un ruban de remplissage (3a, 3b), dans lequel les rubans forment des canaux de remplissage (2a à 2c) entre eux.

5. Procédé selon au moins l'une quelconque des revendications précédentes, **caractérisé en ce que** peuvent être utilisés en tant que matériau pour le ou les rubans des métaux ferreux et non ferreux, ainsi que leurs alliages, en particulier de l'acier, de l'acier inoxydable et des métaux non ferreux et/ou peuvent entrer en considération pour le ou les rubans de remplissage des métaux ferreux et non ferreux, en particulier de l'acier, de l'acier inoxydable, des métaux non ferreux, des métaux précieux, de l'aluminium et leurs alliages.

6. Procédé selon au moins l'une quelconque des revendications précédents, **caractérisé en ce qu'**un côté de l'ensemble de bande, de préférence la face inférieure (U) de l'ensemble de bande, est formé par les rubans (1a, 1b) et le ou les canaux de remplissage (3a).

7. Procédé selon au moins l'une quelconque des revendications précédentes, **caractérisé en ce qu'**un côté de l'ensemble de bande, de préférence la face supérieure (O) de l'ensemble de bande, est formé entièrement par le ou les rubans de remplissage (3a).

8. Procédé selon au moins l'une quelconque des revendications 1 à 6, **caractérisé en ce qu'**un côté de l'ensemble de bande, de préférence la face supérieure (O) de l'ensemble de bande, est formé seulement par endroits par le ou les rubans de remplissage (3a, 3b).

9. Procédé selon au moins l'une quelconque des revendications précédentes, **caractérisé en ce que** les rubans (1a, 1b, 1c) présentent des évidements (A) dans la zone d'au moins un canal de remplissage (2a, 2b) pour recevoir une partie du ruban de remplissage (3a ou 3b), dans lequel est prévu en particulier, que le ruban de remplissage (3a ou 3b) fait saillie à partir du plan formé par les rubans sur la face supérieure.

10. Procédé selon au moins l'une des revendications précédentes, **caractérisé en ce que** les rubans (1a, 1b, 1c) présentent des évidements (A) dans la zone d'au moins un canal de remplissage (2a, 2b) pour recevoir une partie du ruban de remplissage (3a ou 3b), dans lequel est prévu en particulier que le ruban de remplissage (3a ou 3b) ne fait pas saillie à partir du plan formé par les rubans sur la face supérieure.

11. Matériau composite, **caractérisé en ce qu'**il a été fabriqué conformément au procédé selon l'une quelconque des revendications 1 à 10.

12. Matériau composite selon la revendication 11, **caractérisé en ce que** le matériau composite présente une section transversale rectangulaire ou approximativement rectangulaire.

13. Matériau composite selon au moins l'une quelconque des revendications précédentes, **caractérisé en ce que** le canal de remplissage ou les canaux de remplissage (2a à 2c) est(sont) entièrement rempli(s) d'une partie extrudée du ou des rubans de remplissage (3a, 3b).

14. Matériau composite selon au moins l'une quelconque des revendications précédentes, **caractérisé en ce que** le canal de remplissage ou les canaux de remplissage (2a à 2c) sont remplis seulement partiellement d'une partie extrudée du ou des rubans de remplissage (3a, 3b).
